Europäisches Patentamt

European Patent Office

Office européen des brevets

(19)

(11) **EP 0 793 391 B1**

(12) **FASCICULE DE BREVET EUROPEEN**

(45) Date de publication et mention
de la délivrance du brevet:
**22.01.2003 Bulletin 2003/04**

(51) Int Cl.⁷: **H04N 7/50**

(21) Numéro de dépôt: **97410023.2**

(22) Date de dépôt: **25.02.1997**

(54) **Adressage d'une zone mémoire d'un décodeur MPEG**

Speicherbereichadressierung in einem MPEG-Dekodierer

Memory area addressing in an MPEG decoder

(84) Etats contractants désignés:
**DE FR GB IT**

(30) Priorité: **29.02.1996 FR 9602780**

(43) Date de publication de la demande:
**03.09.1997 Bulletin 1997/36**

(73) Titulaire: **STMicroelectronics S.A.**
**92120 Montrouge (FR)**

(72) Inventeur: **Moutin, Jean-Michel**
**38100 Grenoble (FR)**

(74) Mandataire: **de Beaumont, Michel**
**1bis, rue Champollion**
**38000 Grenoble (FR)**

(56) Documents cités:
**EP-A- 0 553 515        EP-A- 0 696 874**
**EP-A- 0 710 028        EP-A- 0 714 208**

## Description

La présente invention concerne l'organisation de la mémorisation d'images numérisées décodées selon une norme MPEG en vue de leur affichage.

Les normes MPEG fixent des conditions de codage d'images vidéo en vue de leur transmission sous forme compressée. Le codage selon une norme MPEG fait appel à une estimation de mouvements de portions d'une image courante par rapport à des portions dans une ou deux images de référence. Une image est découpée en macroblocs de 16x16 pixels, auxquels on applique le processus de compression défini par la norme MPEG.

Côté décodeur, un flux d'images codées est décompressé en vue de son affichage. La présente invention s'applique plus particulièrement à l'organisation de la mémorisation d'images successives du flux de données décodées au moyen d'un décodeur MPEG en vue de leur affichage.

Un flux d'images codées selon une norme MPEG comporte trois types d'images. Un premier type d'images est constitué d'images dites "Intras" I qui contiennent une image courante codée. Pour son décodage, une image "Intra" se suffit à elle-même. Un deuxième type d'images est constitué d'images dites "Prédites" P qui ont besoin d'informations relatives à une image précédente "Intra" ou "Prédite" pour être décodées. Une image "Prédite" contient généralement la différence entre l'image courante et l'image "Intra" ou "Prédite" précédente. Les images I et P sont également appelées des images "ancres". Un troisième type d'images est constitué d'images dites "bidirectionnelles" B qui contiennent des vecteurs mouvements de l'image courante par rapport aux images "ancres" précédente et suivante à l'affichage.

Les images I, P et B comportent toutes un même nombre de données décodées permettant de restituer une image entière, le cas échéant, en ayant recours à une image précédente et/ou suivante.

Pour permettre l'affichage des images, chaque image une fois décodée est mémorisée dans une zone mémoire affectée au type d'images à laquelle elle correspond. En fait, une zone mémoire est affectée aux images bidirectionnelles B et deux zones mémoires sont affectées indifféremment aux images "Intras" I ou "Prédites" P dans la mesure où elles jouent un rôle similaire dans le décodage d'une image bidirectionnelle. Les trois zones mémoire classiques sont de tailles identiques. Chaque zone est écrite suivant un flux de décodage enregistrant les images décodées destinées à être affichées et est lue suivant un flux d'affichage correspondant au flux d'images d'origine avant codage selon la norme MPEG.

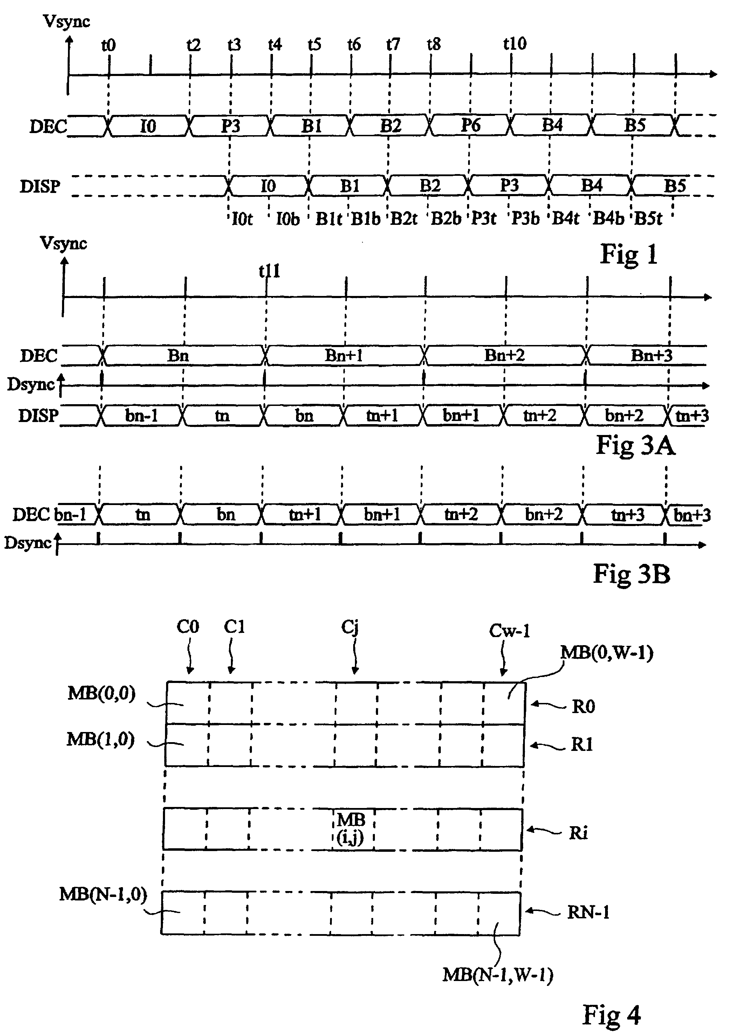

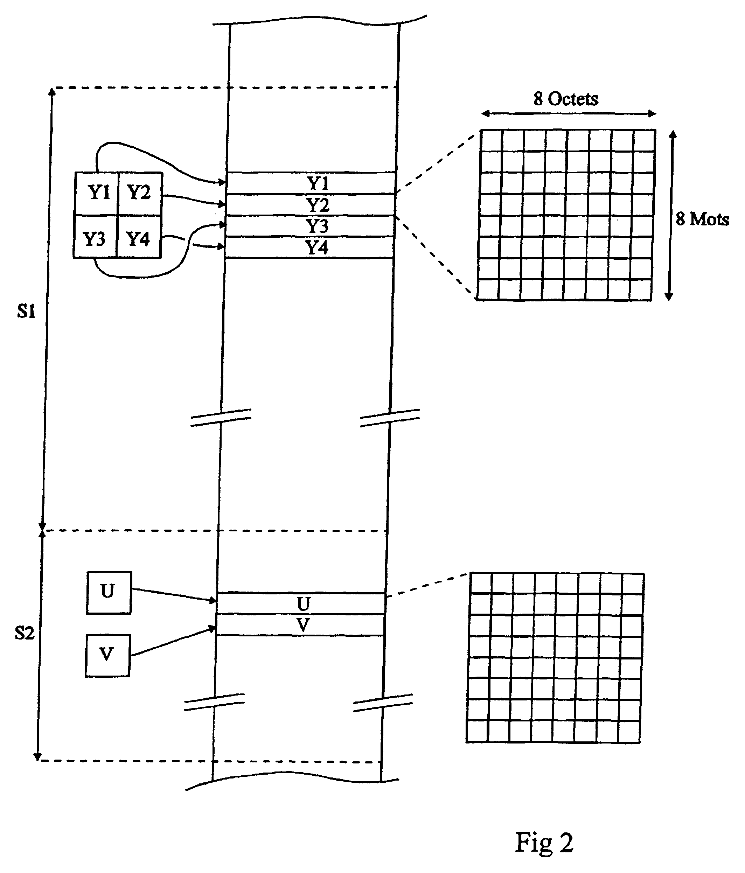

La figure 1 représente un exemple de flux de décodage DEC et d'affichage DISP en fonction d'un signal de synchronisation verticale Vsync, les images étant décodées et affichées suivant un balayage ligne de haut en bas.

Une première image est constituée d'une image "Intra" I0 qui une fois décodée est mémorisée dans une première zone affectée aux images "ancres". Le temps alloué au décodage et à la mémorisation d'une image est celui de l'affichage d'une image. La mémorisation de l'image I0 débute à un instant t0 et dure deux périodes de balayage vertical dans la mesure où l'affichage s'effectue généralement de manière entrelacée. L'image qui suit l'image I0 dans le flux DEC est une image "Prédite" P3 dont le décodage a nécessité des informations contenues dans l'image I0. L'image P3 est enregistrée, dans une deuxième zone mémoire destinée aux images "ancres", pendant deux périodes de balayage vertical (entre les instants t2 et t4).

L'affichage s'effectue de manière entrelacée, c'est-à-dire que du point de vue de l'affichage, une image se divise en deux champs, respectivement pair et impair, le champ pair contenant les lignes paires de l'image et le champ impair contenant les lignes impaires de l'image. Les champs pairs et impairs sont communément désignés d'après leur appellation anglo-saxonne, respectivement "bottom" et "top".

L'affichage de la première image (image Intra I0) est synchronisé sur un instant t3 qui correspond à l'impulsion de synchronisation verticale comprise entre les instants t2 et t4. L'affichage de l'image I0 se termine à un instant t5 qui correspond à l'impulsion de synchronisation verticale qui suit l'instant t4. En fait, le premier champ (généralement impair I0t) de I0 s'affiche entre les instants t3 et t4, le deuxième champ (généralement pair I0b) s'affichant entre les champs t4 et t5.

L'image devant être affichée après l'image I0 est, dans l'exemple représenté, une image bidirectionnelle B1. Cette image est mémorisée dans une troisième mémoire affectée aux images bidirectionnelles à partir de l'instant t4. En effet, le décodage de l'image B1 nécessite d'avoir précédemment décodé deux images "ancres" (ici, les images I0 et P3). Comme l'affichage s'effectue de manière entrelacée, l'affichage du premier champ B1t de l'image B1 peut commencer dès que la moitié de cette image a été décodée et enregistrée dans la zone mémoire correspondante.

L'image B1 est suivie d'une image bidirectionnelle B2 qui est mémorisée dans la troisième zone mémoire entre des instants t6 et t8. Comme à l'instant t6, une première moitié (le champ B1t) de l'image B1 a été affichée, l'affichage du deuxième champ B1b de l'image B1 libère progressivement et complètement la troisième zone mémoire. Les mots mémoires de l'image B2 écrasent alors les mots mémoires de l'image B1 qui n'ont plus d'utilité. Après l'affichage de l'image B2, on affiche l'image P3 qui est extraite de la deuxième zone mémoire. Entre les instants t8 et t10, une image "Prédite" P6 est enregistrée dans la première zone mémoire en écrasant l'image I0 qui n'a plus d'utilité. En effet, l'image P6 est décodée sur la base de l'image "ancre" précédente, c'est-à-dire l'image P3 contenue dans la deuxième zone mémoire, et les images bidirectionnelles B4 et B5 qui suivent dans le flux DEC et qui doivent être affichées avant l'image P6 seront décodées au moyen des images "ancres" précédente et suivante, c'est-à-dire des images P3 et P6. L'ordre différent des images dans les flux DEC et DISP est lié aux normes MPEG qui prévoient que le codage d'une image bidirectionnelle (B) fait appel à une première image ancre (I ou P) précédente et à une deuxième image ancre (I ou P) suivante. Dans le flux DEC, l'image bidirectionnelle est donc postérieure à la deuxième image ancre pour pouvoir être décodée alors qu'elle doit être affichée avant cette deuxième image ancre.

La figure 2 illustre un exemple classique d'organisation d'une zone mémoire destinée à une image bidirectionnelle. A chaque macrobloc de 16x16 pixels d'une image sont généralement associés six blocs de huit mots de huit octets de données numériques (décodées). Quatre blocs Y1, Y2, Y3 et Y4 de 8x8 pixels contiennent des informations relatives à la luminance de chaque pixel. Deux blocs U et V de 8x8 pixels contiennent des informations relatives à la chrominance, un mot d'un bloc U ou V étant utilisé pour 8 pixels. Le stockage des informations d'un macrobloc d'image occupe donc 6 blocs de mots mémoires.

Une zone mémoire est divisée en deux secteurs, respectivement S1 et S2, généralement contigus du point de vue des adresses. Le secteur S1 contient les blocs Y des macroblocs et le secteur S2 contient les blocs U et V des macroblocs. Les macroblocs sont stockés séquentiellement selon un balayage vertical (de haut en bas) et horizontal (de gauche à droite) de l'image, dans chaque zone S1 ou S2, c'est-à-dire que la position d'un macrobloc donné, dans la zone mémoire, est la même quelle que soit l'image à laquelle il appartient.

Les figures 3A et 3B illustrent la différence entre les flux de décodage d'une image bidirectionnelle selon deux cas des normes MPEG. La figure 3A représente les flux de décodage DEC et d'affichage DISP, en fonction du signal Vsync et d'un signal de synchronisation de décodage Dsync, dans le cas où le flux DEC représente des images entrelacées (norme MPEG1 ou images dites "frame structure" dans la norme MPEG2). La figure 3B représente un flux DEC où les images ont été désentrelacées avant codage (images dites "field structure" dans la norme MPEG2).

Dans les deux cas, l'affichage des images s'effectue de manière entrelacée, c'est-à-dire que le flux DISP est le même. Du point de vue de l'affichage, une image bidirectionnelle Bn se divise en deux champs, respectivement pair bn et impair tn.

Si le flux de décodage est entrelacé (figure 3A), les images sont mémorisées séquentiellement comme cela a été exposé en relation avec la figure 2 et l'adressage en lecture de la zone mémoire est tel que les lignes impaires sont extraites avant les lignes paires. Cela permet de commencer le décodage et le stockage d'une image, par exemple Bn+1 (instant t11), dès que l'affichage du champ pair bn de l'image précédente Bn commence.

Dans le cas où le flux de décodage est désentrelacé (figure 3B), la mémorisation s'effectue également de manière séquentielle par rapport au flux de données, c'est-à-dire que le champ impair tn d'une image Bn est mémorisé avant le champ pair bn. Ainsi, il est possible de démarrer l'enregistrement d'une image bidirectionnelle suivante dès que la moitié (le champ impair) de l'image bidirectionnelle précédente a été affichée. Dans un flux DEC désentrelacé, les images sont également découpées en macroblocs correspondant à six blocs mémoires, mais à un macrobloc donné ne correspondent que des données décodées relatives à des lignes de même type (pair ou impair).

La présente invention s'applique plus particulièrement à l'organisation de la zone mémoire destinée aux images bidirectionnelles.

Le document EP-A-0696874 décrit un processeur de décompression de données vidéo dans lequel l'organisation de la mémorisation des images bidirectionnelles est réalisée en affectant, dans une mémoire, des zones distinctes et de tailles déterminées pour les deux champs pair et impair des images.

Les documents EP-A-0714208 et EP-A-0710028 font partie de l'état de la technique au titre de l'article 54(3) CBE pour les désignations FR, DE et GB. Ces documents décrivent des procédés de décodage d'images bidirectionnelles. Pour le premier document, les images sont décodées deux fois et les champs sont affichés (sans mémorisation) après ce double décodage, un premier champ étant affiché à l'issue du premier décodage et un deuxième champ l'étant à l'issue du deuxième décodage d'une même image. Pour le second document, soit on décode deux fois chaque image pour afficher directement chaque champ, soit on utilise des mémoires de tailles déterminées respectivement affectées à un des champs des images bidirectionnelles.

La présente invention vise à proposer un procédé et un système d'adressage d'une zone mémoire destinée à des images bidirectionnelles qui permettent de réduire la taille de la zone mémoire affectée au stockage de ces images.

La présente invention vise également à proposer un procédé et un système d'adressage qui puissent fonctionner aussi bien pour un flux de données entrelacées que pour un flux de données non-entrelacées.

Pour atteindre ces objets, la présente invention prévoit un procédé d'adressage tel que defini par la revendication 1.

Selon un mode de mise en oeuvre de la présente invention, une image est divisée en macroblocs constitués de quatre blocs de pixels et correspondant à un groupe de six blocs mémoires répartis en quatre blocs contenant des informations relatives à la luminance et deux blocs contenant des informations relatives à la chrominance.

Selon un mode de mise en oeuvre de la présente invention, la zone mémoire est divisée en deux secteurs, un premier secteur étant destiné aux huit demi-blocs mémoire de luminance des macroblocs et un deuxième secteur étant destiné aux quatre demi-blocs mémoire de chrominance des macroblocs.

Selon un mode de mise en oeuvre de la présente invention, le procédé consiste, lors de l'enregistrement d'une image bidirectionnelle courante, à écraser, rangée par rangée, les demi-blocs qui ont déjà été extraits pour affichage.

Selon un mode de mise en oeuvre de la présente invention, le flux de données issu du décodeur correspond à un balayage par rangée de l'image à l'intérieur duquel les macroblocs sont reconstitués séquentiellement.

L'invention concerne également un système d'adressage tel que defini par la revendication 6.

Selon un mode de réalisation de la présente invention, le système comporte :

- un premier registre à adressage circulaire destiné à contenir les adresses de début de chaque rangée de demi-blocs d'une première image dans la zone mémoire ;
- un deuxième registre à adressage circulaire destiné à contenir les adresses de début de chaque rangée de demi-blocs d'une deuxième image dans la zone mémoire, les premier et deuxième registres ayant un nombre de lignes correspondant au nombre de rangées d'une image ;
- un troisième registre à adressage circulaire destiné à contenir les adresses de début des rangées de demi-blocs qui ont été extraites pour affichage, le nombre de lignes du troisième registre étant au moins égal au nombre de rangées de macroblocs pouvant être stockées dans la zone mémoire ; et
- des moyens pour basculer le premier registre en lecture et le deuxième registre en écriture, et inversement, l'adresse d'écriture du premier ou deuxième registre étant fournie, après une phase d'initialisation, par le troisième registre.

Selon un mode de réalisation de la présente invention, les données enregistrées de manière circulaire dans le troisième registre correspondent aux adresses délivrées par le premier ou le deuxième registre.

Selon un mode de réalisation de la présente invention, la donnée introduite dans le premier ou le deuxième registre correspond, lors d'une phase d'initialisation, au résultat délivré par un compteur.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

les figures 1 à 3 qui ont été décrites précédemment sont destinées à exposer l'état de la technique et le problème posé ;
la figure 4 représente schématiquement une image divisée en macroblocs ;
la figure 5 illustre l'organisation d'une zone mémoire destinée à des images bidirectionnelles selon la présente invention ;
la figure 6 représente un mode de réalisation d'un dispositif d'adressage de la zone mémoire représentée à la figure 5 ; et
la figure 7 illustre le fonctionnement du dispositif d'adressage représenté à la figure 6.

Une caractéristique de la présente invention est d'organiser l'adressage d'une zone mémoire destinée à des images bidirectionnelles en séparant, dans chaque macrobloc, les lignes impaires et les lignes paires. Ainsi, du point de vue de l'adressage, chaque macrobloc se trouve désentrelacé même si le flux de décodage est de type entrelacé.

La figure 4 représente schématiquement une image divisée en macroblocs de manière classique. L'image est découpée en N rangées Ri de seize lignes de pixels. Chaque rangée comprend un nombre W de macroblocs MB (i, j) où j représente le rang du macrobloc dans la rangée Ri. La position d'un macrobloc est donc définie par l'intersection entre une colonne Cj et une rangée Ri de l'image.

On décrira d'abord l'invention en considérant que les lignes sont entrelacées dans le flux de décodage (voir figure 3A). Puis, on montrera que l'invention s'applique également au cas où le flux de décodage comporte, pour chaque image, un champ impair et un champ pair distincts.

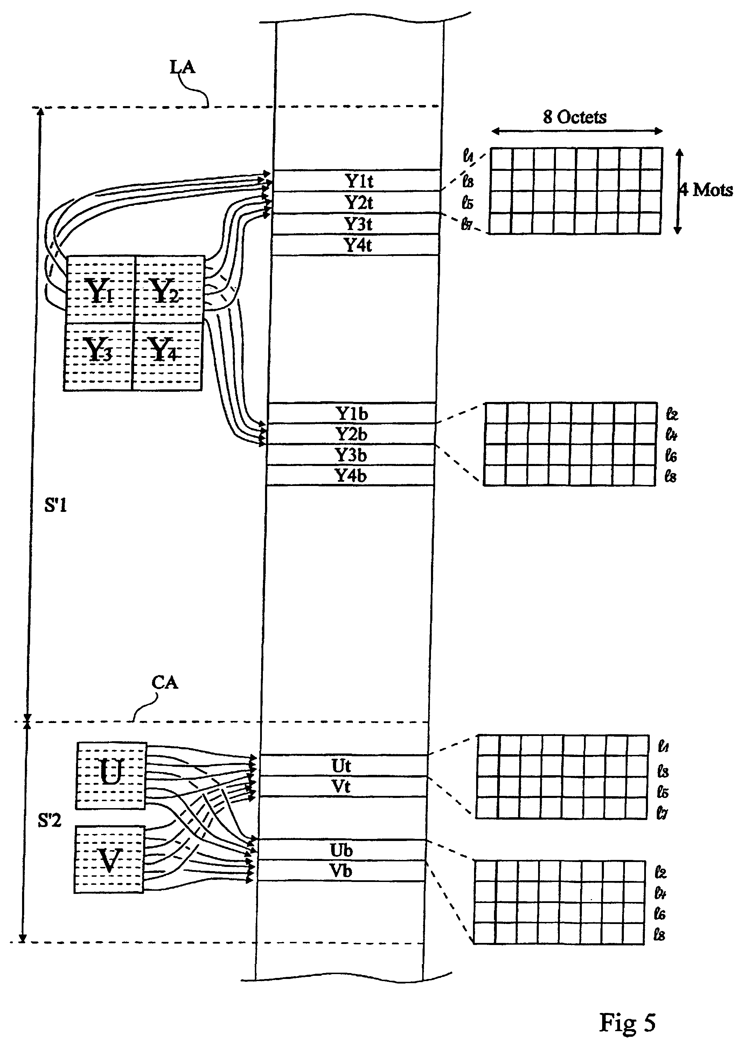

La figure 5 représente schématiquement une zone mémoire destinée aux images bidirectionnelles selon l'invention. Cette zone est, comme précédemment, divisée en deux secteurs S'1 et S'2 destinés à stocker, respectivement, les informations de luminance Y et les informations de chrominance U et V. Dans l'exemple représenté à la figure 5, on considère la mémorisation d'un macrobloc d'image défini par quatre blocs Y1, Y2, Y3 et Y4 de huit mots de huit octets contenant des informations de luminance et de deux blocs U et V de huit mots de huit octets contenant des informations de chrominance.

Selon l'invention, chaque bloc Y1, Y2, Y3, Y4, U ou V est stocké de manière désentrelacée pour obtenir, dans la mémoire, des demi-blocs impairs Y1t, Y2t, Y3t, Y4t, Ut et Vt et des demi-blocs pairs Y1b, Y2b, Y3b, Y4b, Ub et Vb. Les demi-blocs impairs t associés à un macrobloc contiennent, respectivement, les lignes impaires 11, 13, 15 et 17 de chacun des blocs Y1, Y2, Y3, Y4, U et V tandis que les demi-blocs pairs b contiennent, respectivement, les lignes paires 12, 14, 16 et 18 de chacun des blocs Y1, Y2, Y3, Y4, U et V.

Comme les données décodées relatives au macroblocs arrivent, dans le flux de décodage, selon un balayage par rangée Ri et que les données sont lues, dans le flux d'affichage, par ligne de champ, on peut considérer que l'unité de stockage selon la présente invention (unité commune aux deux flux) est l'ensemble de demi-blocs de même champ d'une rangée Ri de macroblocs. Ainsi, les demi-blocs impairs, respectivement pairs, d'un macrobloc M(i, j+1) suivent les demi-blocs impairs, respectivement pairs, d'un macrobloc M(i, j) dans la mémoire. Cette unité sera désignée par la suite "rangée de demi-blocs".

Une caractéristique de la présente invention est que l'adresse de stockage des demi-blocs associés à une rangée Ri de macroblocs donnée n'est pas constante d'une image à l'autre. On tire ici profit du fait que le flux d'affichage, donc la lecture de la zone mémoire, s'effectue toujours de manière entrelacée, c'est-à-dire que les lignes impaires de toute l'image sont affichées avant les lignes paires, ou inversement.

La lecture de la zone mémoire doit respecter l'ordre des données nécessaires à l'affichage de l'image.

Initialement, lorsque la zone mémoire est vide, les rangées de demi-blocs impairs et pairs sont rangées alternativement depuis une adresse LA (ou CA) correspondant au début du secteur S'1 (ou S'2) de la zone mémoire (figure 5). Selon l'invention, l'adressage alterné ne sert que lors du stockage des premières rangées de demi-blocs d'une première image. Par la suite, les adresses de début de rangées sont déterminées, comme on le verra par la suite, pour autoriser une réduction de la taille de la zone mémoire.

La zone mémoire allouée aux images bidirectionnelles est donc, selon l'invention, dimensionnée pour être d'une taille inférieure à la taille nécessaire pour stocker une image entière. Lorsque l'adressage alterné atteint la fin des secteurs respectifs de la zone mémoire, les adresses qui sont allouées aux demi-blocs de la. rangée suivante devant être mémorisés sont des adresses libérées par une lecture de leur contenu pour affichage.

La taille de la zone mémoire est, selon l'invention, choisie pour garantir qu'il y ait toujours un nombre d'adresses, permettant le stockage d'une rangée Ri de macroblocs et, dont le contenu puisse être écrasé sans nuire à l'affichage. La taille minimale correspond donc à une taille nécessaire au stockage des données associées à N/2 + 1 rangées R de macroblocs de l'image. Pour des raisons d'efficacité du décodeur liées à d'autres contraintes, on préférera cependant prendre une marge de quelques rangées supplémentaires. Par exemple, la zone mémoire optimale destinée aux images bidirectionnelles est, dans le cas d'images contenant 36 rangées de macroblocs (taille des images selon la norme PAL), dimensionnée pour pouvoir en contenir 22.

L'adresse d'un octet de données est, selon la présente invention, fonction du numéro de rangée Ri du macrobloc concerné, du rang j du macrobloc contenant le pixel dans cette rangée (colonne Cj), du numéro de ligne dans la rangée et d'une variable FRP déterminée, selon l'invention, indépendamment du type de champ en écriture, et en fonction du type de champ en lecture.

L'adresse d'un mot de huit octets relatif à la luminance, dont la position dans un macrobloc MB(i, j) est définie par la position y verticale (ligne) de huit pixels adjacents dans le macrobloc et par la position x horizontale des huit pixels dans le macrobloc, est donnée par la formule suivante :

$$ADDL(x, y) = 32.FP + 16. (W.FRP + Cj) + 8.(y/8 \text{ modulo } 2) + 4.x$$

$$+ (y \text{ modulo } 8)/2,$$

où FP représente l'adresse de départ de la zone mémoire allouée aux images bidirectionnelles (l'adresse LA à la figure 5), où FRP représente l'adresse de départ de la rangée de demi-blocs à laquelle appartient le mot considéré et où Cj représente le rang du macrobloc dans la rangée Ri (la colonne à laquelle appartient le macrobloc).

L'adresse d'un mot relatif à la chrominance est, de manière similaire, donnée par la relation :

$$ADDC(x, y) = 32.FP + 8.((4.BFS + FRP).W + Cj) + y/2 + 4.z,$$

où z prend la valeur 0 ou 1 selon que le mot est un mot U ou mot V et où BFS représente le nombre de rangées R de macroblocs pour lesquelles la zone mémoire allouée aux images bidirectionnelles a été dimensionnée (la taille du secteur S'1 réservé aux informations de luminance correspond à 32.BFS.W).

Pour l'application de ces formules, on notera que, dans cet exemple, y prend une valeur comprise entre 0 et 15 et que x prend la valeur 0 ou 1 selon que les huit pixels concernés correspondent aux huit premiers ou aux huit derniers pixels de la ligne du macrobloc.

La seule variable qu'il est nécessaire de calculer pour mettre en oeuvre la présente invention est la variable FRP qui identifie l'adresse de départ de la rangée de demi-blocs à laquelle appartient le mot considéré. En effet, les autres variables sont disponibles au sein d'un décodeur MPEG classique.

Les formules ci-dessus sont appliquées au moyen d'un circuit de gestion de la mémoire, par exemple en logique câblée. Un tel circuit est intégré au décodeur. Les modifications à apporter à un circuit classique de gestion pour calculer les adresses, en appliquant les formules ci-dessus et en prenant en compte la nouvelle variable FRP, sont à la portée de l'homme de l'art.

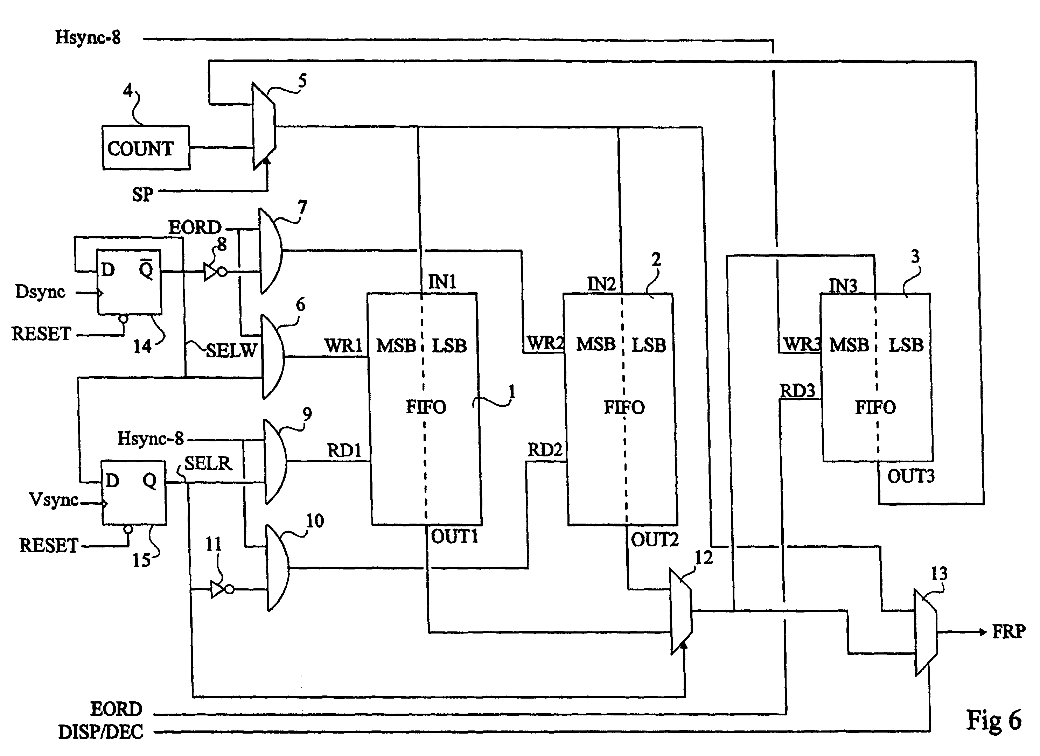

La figure 6 représente un mode de réalisation d'un dispositif d'adressage selon l'invention destiné à calculer l'adresse FRP d'une rangée de demi-blocs dans une zone mémoire telle que représentée à la figure 5. Seuls les constituants du dispositif nécessaires à la compréhension de l'invention ont été représentés.

Une caractéristique de la présente invention est d'utiliser des registres à adressage circulaire (FIFO) dont les données correspondent à l'adresse de départ FRP d'une rangée de demi-blocs dans la mémoire.

Deux FIFOs, respectivement 1 et 2, sont destinées à contenir les adresses de lecture de la mémoire pour l'affichage. Une troisième FIFO 3 est destinée à contenir les adresses disponibles pour l'écriture des données issues du flux de décodage.

Chaque FIFO 1 ou 2 contient un nombre de lignes correspondant au nombre N de rangées R de macroblocs contenues dans une image. La FIFO 3 contient un nombre de lignes correspondant, au minimum, au nombre BFS de rangées R de macroblocs pouvant être stockés dans la zone de la mémoire. Chaque ligne des FIFOs 1 et 2 contient à la fois l'adresse d'une rangée de demi-blocs impairs et d'une rangée de demi-blocs pairs. Les bits de poids fort MSB des FIFOs 1 et 2 contiennent les adresses des rangées de demi-blocs impairs tandis que les bits de poids faible LSB contiennent les adresses des rangées de demi-blocs pairs. A titre d'exemple, la valeur FRP est un mot de sept bits et les adresses des deux rangées de demi-blocs d'une même rangée R de macroblocs sont concaténées en un mot de quatorze bits pour être stockées dans une des FIFOs 1 et 2. Chaque ligne de la FIFO 3 contient également deux adresses de rangées de demi-blocs.

Les FIFOs 1 et 2 sont lues pour l'affichage afin d'obtenir les adresses des données à afficher. Une fois que deux rangées de demi-blocs de même type (pair ou impair), soit seize lignes, ont été affichées, leurs adresses sont écrites dans la FIFO 3 pour indiquer que les données correspondantes de la zone mémoire peuvent être écrasées. Les adresses où les données du flux de décodage doivent être écrites dans la zone mémoire sont lues dans la FIFO 3 et écrites dans une des FIFO 1 ou 2. Pour une image donnée, une seule des FIFOs 1 ou 2 est utilisée. La FIFO sélectionnée change à chaque nouvelle image.

La synchronisation des lectures et des écritures dans les différentes FIFOs peut être réalisée de manière simple en utilisant, par exemple, des portes logiques combinant des signaux de synchronisation présents dans le décodeur MPEG.

Lors de la phase initiale, les adresses écrites dans les BFS premières lignes de la FIFO 1 sont, par exemple, délivrées par un compteur COUNT 4 incrémenté de manière adaptée pour permettre l'adressage alterné des rangées de demi-blocs impairs et pairs. On peut utiliser tout autre moyen adapté pour fournir les 2.BFS valeurs de FRP possibles dans la zone mémoire. On notera que les adresses FRP peuvent être quelconques, pourvu qu'elles permettent un stockage séquentiel, depuis chaque adresse FRP, de toutes les lignes de même champ d'une rangée Ri de macroblocs, soit d'une rangée de demi-blocs.

Par la suite, les adresses écrites dans les FIFOs 1 et 2 correspondent aux données lues dans la FIFO 3. Pour ce faire, un premier multiplexeur 5 dont une sortie est reliée aux entrées de données IN1 et IN2 des FIFOs 1 et 2 est commandé par un signal SP indicateur d'une phase initiale. Le multiplexeur 5 sélectionne la donnée devant être écrite dans la FIFO 1 ou 2 parmi deux entrées reliées, respectivement, à la sortie du compteur 4 et à la sortie de données OUT3 de la FIFO 3.

La sélection de la FIFO ou 2 en écriture est effectuée par une combinaison ET d'un signal de sélection SELW, commandé par un signal de synchronisation de décodage Dsync indiquant un changement d'image dans le flux de décodage, et d'un signal EORD indiquant la fin de décodage d'une rangée Ri de macroblocs. Le signal SELW est positionné en début de séquence d'images bidirectionnelles par un signal RESET actif pour sélectionner la FIFO 1. Ensuite, il s'inverse à chaque synchronisation par le signal Dsync. Pour ce faire, le signal Dsync est envoyé sur une entrée d'horloge d'une bascule D 14 dont une sortie $\overline{Q}$ délivre le signal SELW. La sortie $\overline{Q}$ est reliée à une entrée D de la bascule 14. Le signal RESET est appliqué sur l'entrée d'initialisation de la bascule 14. Le signal EORD est envoyé sur une première entrée de deux portes ET 6 et 7 dont les sorties respectives WR1 et WR2 commandent l'écriture dans les FIFOs 1 et 2. Le signal SELW est envoyé directement sur une deuxième entrée de la porte 6 et, par l'intermédiaire d'un inverseur 8, sur une deuxième entrée de la porte 7.

La sélection de la FIFO 1 ou 2 en lecture est effectuée par une combinaison ET d'un signal de sélection SELR et d'un signal de synchronisation horizontale Hsync_8 qui indique le début de l'affichage d'une rangée de demi-blocs. Le signal SELR est obtenu par échantillonnage et mémorisation, sur le signal de synchronisation verticale Vsync, du signal SELW. Le signal SELR est fourni par une sortie Q d'une bascule D 15 qui reçoit le signal SELW sur une entrée D, le signal Vsync sur une entrée d'horloge et le signal RESET sur une entrée d'initialisation. Le signal Hsync_8 est dérivé du signal de synchronisation ligne et est envoyé sur une première entrée de deux portes ET 9 et 10 dont les sorties respectives RD1 et RD2 commandent la lecture des FIFOs 1 et 2. Le signal SELR est envoyé directement sur une deuxième entrée de la porte 9 et, par l'intermédiaire d'un inverseur 11, sur une deuxième entrée de la porte 10. Le signal SELR sélectionne toujours la FIFO qui était en écriture lors du champ précédent dans la mesure où le signal SELW est, quand il change d'état, en retard par rapport au signal Vsync.

Les sorties de données OUT1 et OUT2 des FIFOs 1 et 2 sont reliées aux entrées d'un deuxième multiplexeur 12 dont une sortie est reliée à l'entrée de données IN3 de la FIFO 3 et à une première entrée d'un troisième multiplexeur 13. Le multiplexeur 12 est commandé par le signal SELR et sélectionne alternativement la sortie de la FIFO 1 et la sortie de la FIFO 2.

Une deuxième entrée du multiplexeur 13 reçoit la sortie du multiplexeur 5. Le multiplexeur 13 délivre l'adresse FRP de début de la rangée de demi-blocs courante dans la zone mémoire. Le multiplexeur 13 est commandé par un signal DISP/DEC en fonction de la tâche à effectuer (lecture ou écriture, soit affichage ou décodage) dans la zone mémoire à l'adresse considérée. Le multiplexeur 13 sélectionne sa première entrée pour la lecture et sa deuxième entrée pour l'écriture dans la zone mémoire.

La commande en écriture WR3 de la FIFO 3 s'effectue au moyen du signal Hsync_8 et la commande en lecture RD3 de la FIFO 3 s'effectue au moyen du signal EORD.

Le fonctionnement d'un dispositif d'adressage selon l'invention utilisant trois FIFOs de stockage temporaire des adresses, qu'il soit réalisé conformément à l'exemple de la figure 6 ou par d'autres moyens, sera décrit par la suite de manière fonctionnelle.

Initialement, lorsque la zone mémoire allouée aux images bidirectionnelles est vide, les BFS premières rangées R d'une première image bidirectionnelle B1 sont stockées séquentiellement dans la zone mémoire en séparant les champs pairs des champs impairs et les adresses des rangées des demi-blocs correspondants sont mémorisées dans la FIFO 1. Pour des raisons de clarté, on considère que l'écriture et la lecture dans les FIFOs débutent à leurs premières lignes respectives. Il s'agit d'une pure convention sans conséquence sur le fonctionnement dans la mesure où l'adressage des FIFOs est circulaire. Dans ce qui suit, on prend pour exemple des images de 36 rangées de macroblocs et une zone mémoire ayant une capacité de 22 rangées de macroblocs.

L'affichage de l'image B1 débute, comme cela a été exposé en relation avec la figure 3A, une fois qu'environ la moitié de l'image a été mémorisée, soit aux alentours de 18 (N/2) rangées de macroblocs. Comme l'affichage s'effectue de manière entrelacée, la lecture pour affichage commence par les rangées d'un champ, généralement impair. Lorsque deux rangées de demi-blocs impairs de l'image B1 ont été affichées, leurs adresses contenues dans les 7 bits de poids fort MSB des deux premières lignes de la FIFO 1 sont concaténées et écrites dans la première ligne de la FIFO 3 indiquant leur disponibilité pour écrasement. Lorsque l'affichage du champ d'image impair B1t commence, le système est toujours en phase initiale jusqu'à ce que le nombre de rangées R décodées atteigne 22 (BFS). Le système peut alors lire la première ligne de la FIFO 3 et utilise ces données pour mémoriser la rangée R suivante de l'image. Le processus se poursuit et les rangées R suivantes de l'image B1 peuvent être mémorisées en écrasant, au fur et à mesure de l'affichage, les rangées de demi-blocs impairs. Dans l'exemple considéré, la première rangée de l'image B1 qui écrase des données est la rangée 23 (BFS + 1). Les demi-blocs impairs de la rangée 23 écrasent les demi-blocs impairs de la rangée 1 et les demi-blocs pairs de la rangée 23 écrasent les demi-blocs impairs de la rangée 2. Les adresses correspondantes sont, comme précédemment, écrites dans la FIFO 1 sur une même ligne (mot de 14 bits). Comme l'adressage des FIFOs est circulaire, la FIFO 1 contient lorsqu'elle est pleine, toutes les adresses qui ont servi pour stocker l'image B1. On notera que 14 (N - BFS) lignes de la FIFO 1 contiennent des adresses déjà présentes dans les lignes précédentes.

Lorsque l'intégralité du champ d'image impair B1t de l'image B1 a été affiché, l'affichage du champ B1b débute et les adresses correspondantes qui sont contenues dans les bits de poids faibles LSB de la FIFO 1 sont écrites, deux par deux, dans la FIFO 3. Les adresses lues dans la FIFO 3 servent au stockage de l'image B2 et sont stockées dans la FIFO 2. Ainsi, les FIFO 1 et 2 sont respectivement affectées à une image sur deux. Les demi-blocs impairs et pairs de la rangée 1 de l'image B2 écrasent les demi-blocs impairs des rangées 29 et 30 de l'image B1 qui avaient eux-mêmes écrasé les demi-blocs impairs des rangées 13 et 15 de l'image B1. Les adresses correspondantes dans la zone mémoire sont écrites dans la première ligne de la FIFO 2. Les premiers demi-blocs pairs de l'image B1 à être écrasés sont ceux des rangées 1 et 2 qui sont écrasés par les demi-blocs impairs et pairs de la rangée 5 de l'image B2.

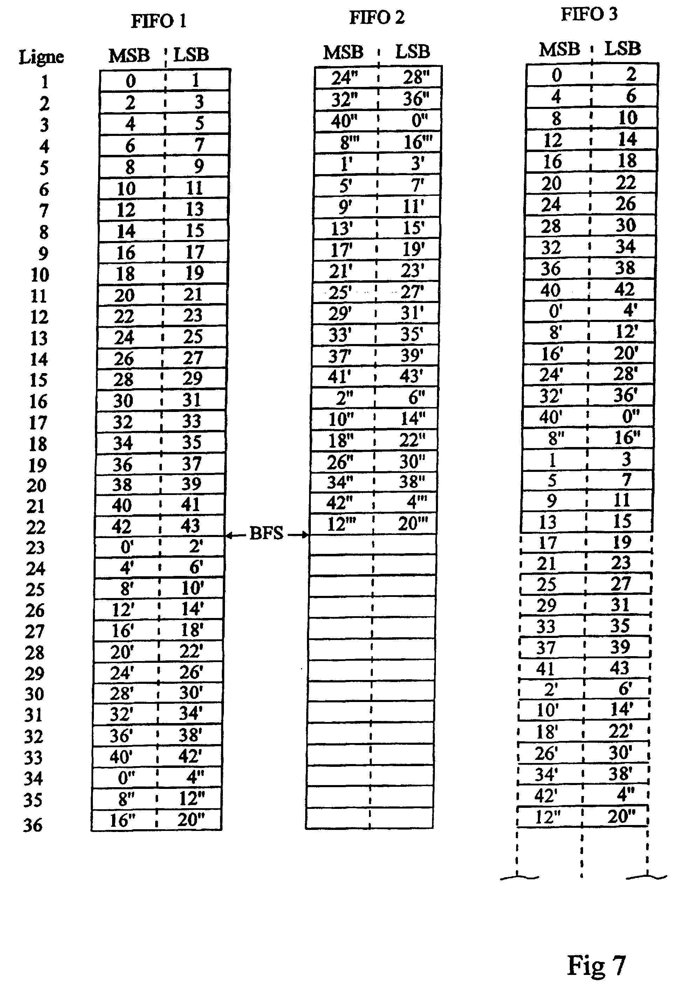

La figure 7 illustre le contenu des FIFO 1, 2 et 3 une fois que l'image B1 a été intégralement affichée et que l'image B2 a été partiellement décodée mais n'a pas commencé à être affichée. La figure 7 représente donc une "photographie" sensiblement à l'instant t7 (figure 1) juste avant le début de l'affichage de l'image B2. Les numéros indiqués à la figure 7 correspondent aux adresses (FRP) de départ des rangées de demi-blocs dans la zone mémoire. Ces adresses ont été affectées de ', " ou "' dans les FIFOs 1 et 2 selon qu'elles sont utilisées, respectivement, pour la deuxième, troisième ou quatrième fois pour l'écriture de données. Le contenu des lignes de la FIFO 3 correspond aux adresses FRP lues dans les FIFOs 1 et 2 (ici, la FIFO 1) lors de l'affichage. On notera que bien que la FIFO 3 ait été représentée avec un nombre de lignes supérieur à BFS pour des raisons de clarté, il suffit qu'elle ait 22 lignes, la partie basse (en pointillés à la figure 7) de la FIFO 3 représentée correspondant alors à un deuxième cycle où les adresses FRP (17, 19, etc.) écrasent les adresses FRP (0, 2, etc.).

Lorsque le champ d'image impair B2t a été affiché, l'affichage du champ d'image pair B2b débute ainsi que le stockage des données relatives à l'image B3. Les premières adresses de stockage de l'image B3 sont écrites dans la première ligne de la FIFO 1. Les adresses d'écriture et de lecture des FIFO 1 et 2 sont réinitialisées à chaque début d'image qui leur est destinée, c'est-à-dire sur le signal Dsync pour l'écriture et sur le signal Vsync pour la lecture. Pour ce faire, des impulsions d'écriture sont envoyées à la FIFO 1 ou 2 à la fin du stockage d'une image pour repositionner l'adresse d'écriture à la première ligne, et des lectures successives sont effectuées à la fin de l'affichage d'une image pour repositionner l'adresse de lecture à la première ligne. La FIFO 3 est réinitialisée au début du stockage d'une première image bidirectionnelle qui suit une image "ancre".

L'écriture dans une FIFO 1 ou 2 s'effectue à la fin du stockage de la rangée Ri correspondante de macroblocs (signal EORD à la figure 6). La lecture dans une FIFO 1 ou 2 s'effectue au début de l'affichage des 8 lignes des demi-blocs (pairs ou impairs) de la rangée concernée (signal Hsync_8 à la figure 6). La lecture de la FIFO 3 s'effectue au début du stockage d'une rangée Ri de macroblocs (signal EORD à la figure 6). L'écriture dans la FIFO 3 s'effectue à la fin de l'affichage de deux rangées de demi-blocs (pairs ou impairs) consécutives (signal Hsync_8 à la figure 6).

L'organisation de la zone mémoire prévue selon la présente invention fonctionne également dans le cas où le flux de décodage est désentrelacé.

Dans ce cas, on traite deux rangées à la fois dans la mesure où le flux de décodage contient déjà le découpage par champ. On utilise les bits de poids forts MSB de la FIFO 1 (ou 2) pour les champs impairs et les bits de poids faibles LSB de la FIFO 2 (ou 1) pour les champs pairs. Ainsi, si la première image bidirectionnelle de la séquence contient les données d'un champ impair, les bits MSB de la FIFO 1 sont lus pour affichage du champ d'image impair B1t pendant que les bits LSB de la FIFO 2 sont écrits avec les adresses de stockage du champ d'image pair B1b. Puis, les bits LSB de la FIFO 2 sont lus pour affichage du champ d'image pair B1b alors que les bits MSB de la FIFO 1 sont écrits pour stockage du champ d'image impair B2t et ainsi de suite.

La phase d'initialisation (SP) où les deux FIFOs 1 et 2 sont vides peut suivre deux modes de fonctionnement différents en fonction de la capacité de stockage choisie pour la zone mémoire. On notera qu'une adresse contenue dans une des FIFOS représente toujours l'adresse de départ d'une rangée de demi-blocs, et que cette rangée contient toujours le même nombre de mots mémoires, que le flux soit entrelacé ou non.

Si BFS est supérieur à la moitié du nombre N de rangées R d'une image, le stockage du champ B1t dans la FIFO 1 et du début du champ B1b dans la FIFO 2 s'effectue séquentiellement jusqu'à ce que le nombre de rangées atteigne 2.BFS. Puis, la lecture de la FIFO 3 permet d'organiser le stockage de la fin du champ B1b.

Si BFS est inférieur à la moitié du nombre N de rangées de l'image, le stockage séquentiel du champ B1t s'arrête lorsque le nombre de rangées atteint 2.BFS. La lecture de la FIFO 3 organisant la fin du stockage du champ B1t dans la FIFO 1 est retardée jusqu'au début de l'affichage du champ B1t. Dans ce cas, tous les champs B(i)t et B(i)b (sauf le premier B1t) commencent à être stockés après le début de l'affichage du champ précédent B(i-1)b ou B(i)t (l'affichage s'effectue selon l'ordre b(i-1)t, b(i-1)b, B(i)t, B(i)b), mais cela permet de diminuer encore la taille de la zone mémoire.

Pour ce qui est de la FIFO 3, ses bits de poids forts MSB et de poids faibles LSB sont utilisés. Les bits MSB et LSB sont utilisés pour reconstruire une rangée de macroblocs d'un champ d'image désentrelacé qui représente deux rangées consécutives de demi-blocs selon l'invention.

On notera que, lorsque la séquence contient à la fois des images entrelacées et désentrelacées, le fonctionnement du système n'est pas altéré et les transitions d'un mode à l'autre ne posent pas de problème. L'adaptation de la commande des trois FIFOs de la figure 6 pour permettre le fonctionnement selon que les images sont entrelacées ou non est à la portée de l'homme de l'art en fonction des indications fonctionnelles données ci-dessus.

Un avantage de la présente invention est qu'elle permet de réduire considérablement la taille d'une mémoire associée à un décodeur MPEG. Alors qu'un système classique nécessite une zone mémoire correspondant à la capacité de stockage de toutes les données d'une image, la présente invention permet, par exemple pour un nombre BFS de 22 sur des images de 36 rangées, de n'utiliser que 0,61 fois (BFS/N) la taille nécessaire au stockage de toutes les données d'une image bidirectionnelle.

La mise en oeuvre de la présente invention permet notamment, de décoder et afficher un flux MPEG avec des images de 720x576 pixels dans une mémoire de 16 Mbit qui constitue une taille standard de mémoire alors que, dans les systèmes classiques, une telle capacité n'est pas suffisante.

Bien entendu, la présente invention est susceptible de diverses variantes et modifications qui apparaîtront à l'homme de l'art. En particulier, les circuits utilisés pour la réalisation du dispositif d'adressage pourront être remplacés par un ou plusieurs circuits remplissant la même fonction. De plus, les dimensionnement des registres FIFO pourront être modifiés en fonction de l'application de l'invention, en particulier, de la taille des images destinées à être stockées. En outre, la réalisation pratique d'un dispositif de mise en oeuvre de la présente invention à partir de trois registres FIFO est à la portée de l'homme de l'art à partir des indications fonctionnelles données ci-dessus.

**Revendications**

1. Procédé d'adressage d'une zone mémoire (S'1 S'2) allouée à des images bidirectionnelles (B) issues d'un décodeur selon une norme MPEG et organisées en rangées (Ri) de macroblocs constitués de blocs (Y1, Y2, Y3, Y4, U, V) contenant des données relatives à un groupe de pixels de l'image, selon lequel chaque bloc de données (Y1, Y2, Y3, Y4, U, V) est divisé en demi-bloc (Y1t, Y2t, Y3t, Y4t, Ut, Vt) de lignes impaires (11, 13, 15, 17) et demi-bloc (Y1b, Y2b, Y3b, Y4b, Ub, Vb) de lignes paires (12, 14, 16, 18), **caractérisé en ce qu'**il consiste :

   - à organiser le stockage séquentiel de tous les demi-blocs de même type (t, b) d'une même rangée (Ri) de macroblocs ; et
   - à organiser le stockage de chaque rangée contenant des demi-blocs de même type, indépendamment du type de demi-blocs qu'elle contient, la taille de la zone mémoire étant inférieure à la taille d'une image mémoire et correspondant, au minimum, à la moitié de la taille d'une image mémoire majorée de la taille d'une rangée de macroblocs, et l'adresse d'écriture d'une rangée de demi-blocs dans la zone mémoire étant déterminée en fonction des adresses rendues disponibles par l'affichage de rangées antérieures.

2. Procédé d'adressage selon la revendication 1, **caractérisé en ce qu'**une image est divisée en macroblocs (MB (i, j)) constitués de quatre blocs de pixels et correspondant à un groupe de six blocs mémoires répartis en quatre blocs (Y1, Y2, Y3, Y4) contenant des informations relatives à la luminance et deux blocs (U, V) contenant des informations relatives à la chrominance.

3. Procédé d'adressage selon la revendication 2, **caractérisé en ce que** la zone mémoire est divisée en deux secteurs (S'1, S'2), un premier secteur (S'1) étant destiné aux huit demi-blocs mémoires de luminance (Y1t, Y2t, Y3t, Y4t, Y1b, Y2b, Y3b, Y4b) des macroblocs (MB(i, j)) et un deuxième secteur (S'2) étant destiné aux quatre demi-blocs mémoires de chrominance (Ut, Vt, Ub, Vb) des macroblocs (MB(i, j)).

4. Procédé d'adressage selon l'une quelconque des revendications 1 à 3, **caractérisé en ce qu'**il consiste, lors de l'enregistrement d'une image bidirectionnelle (B) courante, à écraser, rangée par rangée, les demi-blocs (t, b) qui ont déjà été extraits pour affichage.

5. Procédé d'adressage selon l'une quelconque des revendications 1 à 4, **caractérisé en ce que** le flux de données (DEC) issu du décodeur correspond à un balayage par rangée (Ri) de l'image à l'intérieur duquel les macroblocs sont reconstitués séquentiellement.

6. Système d'adressage pour la mise en oeuvre du procédé selon l'une quelconque des revendications 1 à 5, **caractérisé en ce qu'**il comporte un dispositif d'adressage pourvu de moyens pour calculer, à chaque nouvelle rangée de demi-blocs pair ou impair, l'adresse (FRP) de début de rangée dans la zone mémoire.

7. Système d'adressage selon la revendication 6, **caractérisé en ce qu'**il comporte :

   - un premier registre (1) à adressage circulaire (FIFO) destiné à contenir les adresses (FRP) de début de chaque rangée de demi-blocs d'une première image (B1) dans la zone mémoire ;
   - un deuxième registre (2) à adressage circulaire (FIFO) destiné à contenir les adresses (FRP) de début de chaque rangée de demi-blocs d'une deuxième image (B2) dans la zone mémoire, les premier (1) et deuxième (2) registres ayant un nombre (N) de lignes correspondant au nombre de rangées (R) d'une image ;
   - un troisième registre (3) à adressage circulaire (FIFO) destiné à contenir les adresses (FRP) de début des rangées de demi-blocs qui ont été extraites pour affichage, le nombre de lignes du troisième registre (3) étant au moins égal au nombre (BFS) de rangées (R) de macroblocs pouvant être stockées dans la zone mémoire ; et
   - des moyens pour basculer le premier registre (1) en lecture et le deuxième registre (2) en écriture, et inversement, l'adresse d'écriture du premier (1) ou deuxième (2) registre étant fournie, après une phase d'initialisation, par le troisième registre (3).

8. Système d'adressage selon la revendication 7, **caractérisé en ce que** les données enregistrées de manière circulaire dans le troisième registre (3) correspondent aux adresses délivrées par le premier (1) ou le deuxième (2) registre.

9. Système d'adressage selon la revendication 7 ou 8, **caractérisé en ce que** la donnée introduite dans le premier (1) ou le deuxième (2) registre correspond, lors d'une phase d'initialisation (SP), au résultat délivré par un compteur (4).

**Patentansprüche**

1. Verfahren zur Adressierung eines Speicherbereichs (S'1, S'2), der bidirektionalen Bildern (B) von einem Decoder zugeteilt ist, die dem MPEG Standard entsprechen und in Reihen (Ri) von Makroblocks, die aus Blöcken (Y1, Y2, Y3, Y4, U, V) bestehen, organisiert sind, die jeweils die zu einer Gruppe von Pixeln eines Bildes gehörigen Daten enthalten, wobei jeder Datenblock (Y1, Y2, Y3, Y4, U, V) in einen Halbblock (Y1t, Y2t, Y3t, Y4t, Ut, Vt) von ungeraden Zeilen (*l*1, *l*3, *l*5, *l*7) und einen Halbblock (Y1b, Y2b, Y3b, Y4b, Ub, Vb) von geraden Zeilen (*l*2, *l*4, *l*6, *l*8) geteilt ist, **dadurch gekennzeichnet, daß** es folgendes umfaßt:

   - Organisieren einer sequentiellen Speicherung aller Halbblöcke des gleichen Typs (t, b) der gleichen Reihe (Ri) von Makroblöcken; und
   - Organisieren der Speicherung jeder Reihe, die Halbblöcke des gleichen Typs enthält, unabhängig von den enthaltenen Typ, wobei die Größe des Speicherbereiches geringer ist als die Größe eines Speicherbildes und mindestens einer Hälfte der Größe eines Speicherbildes plus der Größe einer Makroblockreihe entspricht und die Schreibadresse einer Halbblockreihe in dem Speicherbereich eine Funktion von für die Anzeige von vorausgegangenen Reihen zugänglich gemachten Adressen ist.

2. Verfahren zur Adressierung nach Anspruch 1, **dadurch gekennzeichnet, daß** ein Bild in Makroblöcke (MB(i, j)) bestehend aus vier Pixelblöcken eingeteilt wird, die einer Gruppe von sechs Speicherblöcken entsprechen, die auf vier Blöcke (Y1, Y2, Y3, Y4) und zwei Blöcke (U, V) verteilt sind, wobei die vier Blöcke die Luminanz betreffende Informationen enthalten und die zwei Blöcke (U, V) die Chrominanz betreffende Information enthalten.

3. Verfahren zur Adressierung nach Anspruch 2, **dadurch gekennzeichnet, daß** der Speicherbereich in zwei Abschnitte (S'1, S'2) eingeteilt ist, einem ersten Abschnitt (S'1) für die acht Luminanz-Halbspeicherblöcke (Y1t, Y2t, Y3t, Y4t, Y1b, Y2b, Y3b, Y4b) der Makroblöcke (MB(i, j)) und einem Abschnitt (S'2) für die vier Chrominanz-Halbspeicherblöcke (Ut, Vt, Ub, Vb) der Makroblöcke (MB(i,j)).

4. Verfahren zur Adressierung nach einem der Ansprüche 1 bis 3, **dadurch gekennzeichnet, daß** es für die Aufzeichnung der Aufnahme eines momentanen bidirektionalen Bildes (B) aus dem reihenweisen Schreiben über die Halbblöcke (t, b), die bereits für die Anzeige extrahiert wurden, besteht.

5. Verfahren zur Adressierung nach einem der Ansprüche 1 bis 4, **dadurch gekennzeichnet, daß** der Datenfluß (DEC) von dem Decoder einem reihenweisen (Ri) Abtasten des Bildes entspricht, innerhalb dessen die Makroblöcke sequentiell wiederhergestellt werden.

6. Adressierungssystem zur Implementation des Verfahrens nach einem der Ansprüche 1 bis 5, **dadurch gekennzeichnet, daß** es eine Adressierungsvorrichtung umfaßt, die Mittel zur Berechnung der in dem Speicherbereich liegenden Reihenstartadresse (FRP) für jede neue Reihe der geraden oder ungeraden Halbblöcke umfaßt.

7. Adressierungsystem nach Anspruch 6, **dadurch gekennzeichnet, daß** es folgendes umfaßt:

   - ein erstes zyklisches Adreßregister (FIFO) (1), das die Adressen (FRP) jedes Reihenanfangs der Halbblockreihen eines ersten Bildes (B1) in dem Speicherbereich enthält;
   - ein zweites zyklisches Adreßregister (FIFO) (2), das die Adressen (FRP) jedes Reihenanfangs der ersten Halbblockreihen eines zweiten Bildes (B2) in dem Speicherbereich enthält, wobei die ersten (1) und zweiten (2) Register eine Anzahl (N) von Zeilen haben, die der Anzahl der Reihen (R) eines Bildes entspricht;
   - ein drittes zyklisches Adreßregister (FIFO) (3), das die Adressen (FRP) des Anfangs jeder Halbblockreihe enthält, die zur Anzeige extrahiert wurde, wobei die Anzahl der Zeilen im dritten Register (3) mindestens gleich der Anzahl (BFS) der Makroblockreihen (R) entspricht, die in dem Speicherbereich gespeichert werden können; und
   - Schaltmittel, um das erste Register (1) in den Lesebetrieb zu schalten und das zweite Register (2) in den Schreibbetrieb zu schalten und umgekehrt, wobei die Schreibadresse des ersten (1) und zweiten (2) Registers nach einer Startphase durch das dritte Register (3) ausgegeben wird.

8. Adressierungssystem nach Anspruch 7, **dadurch gekennzeichnet, daß** die in dem dritten Register (3) zirkular gespeicherten Daten den Adressen entsprechen, die durch das erste (1) oder zweite (2) Register ausgegeben wurden.

9. Adressierungssystem nach Anspruch 7 oder 8, **dadurch gekennzeichnet, daß** die Datumseingabe in das erste (1) oder zweite (2) Register während einer Startphase (SP) dem Ergebnis entspricht, das durch einen Zähler (4) ausgegeben wurde.

**Claims**

1. A method for addressing a memory area (S'1 S'2) assigned to bidirectional images (B) from a decoder according to an MPEG standard and organized in rows (Ri) of macroblocks constituted by blocks (Y1, Y2, Y3, Y4, U, V) containing data relative to a group of pixels of the image, in which each data block (Y1, Y2, Y3, Y4, U, V) is divided into a half-block (Y1t, Y2t, Y3t, Y4t, Ut, Vt) of odd lines ($l1$, $l3$, $l5$, $l7$) and a half-block (Y1b, Y2b, Y3b, Y4b, Ub, Vb) of even lines ($l2$, $l4$, $l6$, $l8$); **characterized in that** it comprises:

   - organizing a sequential storing of all the half-blocks of the same type (t, b) of a same row (Ri) of macroblocks; and
   - organizing the storing of each row containing half-blocks of a same type, independently from the type of contained half-blocks, the size of the memory area being smaller than the size of a memory image and corresponding, at least, to one half of the size of a memory image plus the size of a macroblock row, and the write address of a half-block row in the memory area being a function of the addresses made available further to the display of former rows.

2. An addressing method according to claim 1, **characterized in that** an image is divided into macroblocks (MB(i,j)) comprised of four pixel blocks and corresponding to a group of six memory blocks distributed in four blocks (Y1, Y2, Y3, Y4) containing information relative to luminance and two blocks (U, V) containing information relative to chrominance.

3. An addressing method according to claim 2, **characterized in that** the memory area is divided in two sectors (S'1, S'2), a first sector (S'1) for the eight luminance half memory blocks (Y1t, Y2t, Y3t, Y4t, Y1b, Y2b, Y3b, Y4b) of the macroblocks (MB(i,j)) and a second sector (S'2) for the four chrominance half memory blocks (Ut, Vt, Ub, Vb) of the macroblocks (MB(i,j)).

4. An addressing method according to any of claims 1 to 3, **characterized in that** it consists, in the recording of a current bidirectional image (B), in writing, row by row, over the half-blocks (t, b) which have already been extracted for display.

5. An addressing method according to any of claims 1 to 4, **characterized in that** the data flow (DEC) from the decoder corresponds to a scanning by rows (Ri) of the image within which the macroblocks are restored sequentially.

6. An addressing system for implementing the method according to any of claims 1 to 5, **characterized in that** it includes an addressing device comprising means for calculating, for each new row of even or odd half-blocks, the row beginning address (FRP) in the memory area.

7. An addressing system according to claim 6, **characterized in that** it includes:

   - a first circular addressing (FIFO) register (1) for containing the addresses (FRP) of the beginning of each row of half-blocks of a first image (B1) in the memory area;
   - a second circular addressing (FIFO) register (2) for containing the addresses (FRP) of the row beginnings of the half-blocks of a second image (B2) in the memory area, the first (1) and second (2) registers having a number (N) of lines corresponding to the number of rows (R) of an image;
   - a third circular addressing (FIFO) register (3) for containing the addresses (FRP) of the beginning of the half-block rows which have been extracted for display, the number of lines of the third register (3) being at least equal to the number (BFS) of macroblock rows (R) which can be stored in the memory area; and
   - means for switching the first register (1) to the read mode and the second register (2) to the write mode, and conversely, the write address of the first (1) or second (2) register being issued, after a start phase, by the third register (3).

8. An addressing system according to claim 7, **characterized in that** the data stored circularly in the third register (3) correspond to the addresses issued by the first (1) or second (2) register.

9. An addressing system according to claim 7 or 8, **characterized in that** the datum input in the first (1) or second (2) register corresponds, in a start phase (SP), to the result issued by a counter (4).

Fig 1

Fig 3A

Fig 3B

Fig 4

8 Octets

8 Mots

S1

Y1
Y2
Y3
Y4

Y1 Y2
Y3 Y4

S2

U

V

U
V

Fig 2

Fig 5

Fig 6

| Ligne | FIFO 1 MSB | FIFO 1 LSB | FIFO 2 MSB | FIFO 2 LSB | FIFO 3 MSB | FIFO 3 LSB |
|---|---|---|---|---|---|---|
| 1 | 0 | 1 | 24" | 28" | 0 | 2 |
| 2 | 2 | 3 | 32" | 36" | 4 | 6 |
| 3 | 4 | 5 | 40" | 0" | 8 | 10 |
| 4 | 6 | 7 | 8''' | 16''' | 12 | 14 |
| 5 | 8 | 9 | 1' | 3' | 16 | 18 |
| 6 | 10 | 11 | 5' | 7' | 20 | 22 |
| 7 | 12 | 13 | 9' | 11' | 24 | 26 |
| 8 | 14 | 15 | 13' | 15' | 28 | 30 |
| 9 | 16 | 17 | 17' | 19' | 32 | 34 |
| 10 | 18 | 19 | 21' | 23' | 36 | 38 |
| 11 | 20 | 21 | 25' | 27' | 40 | 42 |
| 12 | 22 | 23 | 29' | 31' | 0' | 4' |
| 13 | 24 | 25 | 33' | 35' | 8' | 12' |
| 14 | 26 | 27 | 37' | 39' | 16' | 20' |
| 15 | 28 | 29 | 41' | 43' | 24' | 28' |
| 16 | 30 | 31 | 2" | 6" | 32' | 36' |
| 17 | 32 | 33 | 10" | 14" | 40' | 0" |
| 18 | 34 | 35 | 18" | 22" | 8" | 16" |
| 19 | 36 | 37 | 26" | 30" | 1 | 3 |
| 20 | 38 | 39 | 34" | 38" | 5 | 7 |
| 21 | 40 | 41 | 42" | 4''' | 9 | 11 |
| 22 | 42 | 43 | 12''' | 20''' | 13 | 15 |
| 23 | 0' | 2' | | | 17 | 19 |
| 24 | 4' | 6' | | | 21 | 23 |
| 25 | 8' | 10' | | | 25 | 27 |
| 26 | 12' | 14' | | | 29 | 31 |
| 27 | 16' | 18' | | | 33 | 35 |
| 28 | 20' | 22' | | | 37 | 39 |
| 29 | 24' | 26' | | | 41 | 43 |
| 30 | 28' | 30' | | | 2' | 6' |
| 31 | 32' | 34' | | | 10' | 14' |
| 32 | 36' | 38' | | | 18' | 22' |
| 33 | 40' | 42' | | | 26' | 30' |
| 34 | 0" | 4" | | | 34' | 38' |
| 35 | 8" | 12" | | | 42' | 4" |
| 36 | 16" | 20" | | | 12" | 20" |

BFS (between FIFO 1 ligne 23 and FIFO 2)

Fig 7